# EUROPÄISCHE PATENTSCHRIFT

(11) **EP 2 746 650 B1**
(45) Veröffentlichungstag und Bekanntmachung des Hinweises auf die Patenterteilung: **13.05.2020**
(21) Anmeldenummer: 13198098.9
(22) Anmeldetag: 18.12.2013
(51) Int. Cl.: F21V 8/00, F21S 8/06

(54) **Leuchte mit einem gekrümmten Lichtleitelement**
Luminaire with a curved light conducting element
Lampe dotée d'un élément de guidage de la lumière courbé

(30) Priorität: 19.12.2012 DE 202012104953 U
(43) Veröffentlichungstag der Anmeldung: 25.06.2014
(73) Patentinhaber: Zumtobel Lighting GmbH, 6850 Dornbirn (AT)
(72) Erfinder: Hobelsberger, Georg, 6900 Bregenz (AT)
(74) Vertreter: Thun, Clemens

(56) Entgegenhaltungen:
- EP-A1- 2 527 725
- WO-A1-2012/168822
- WO-A2-2009/136310
- US-A1- 2010 220 497
- US-A1- 2010 315 811
- US-B1- 6 874 924

## Beschreibung

Die Erfindung betrifft eine Leuchte mit einem Leuchtmittel und einem Lichtleitelement.

Eine solche Leuchte ist aus der Schrift DE 10 2008 014 317 A1 bekannt. Bei dieser Leuchte ist das Lichtleitelement durch einen plattenförmig gestalteten Lichtleiter gebildet. An zwei gegenüberliegenden Schmalseiten des Lichtleiters sind LED-Lichtquellen (LED: Licht emittierende Diode) so angeordnet, dass ihr Licht in den Lichtleiter eingekoppelt wird. Über eine Flachseite des Lichtleiters wird das Licht abgegeben. Zur Halterung des Lichtleiters sind an zwei gegenüberliegenden Seiten des Lichtleiters Trageelemente angeordnet.

Bei Betrachtung der Leuchte mit Blick auf den Lichtleiter fallen somit weitere Bauteile der Leuchte optisch deutlich auf, die zum Tragen des Lichtleiters sowie zur Halterung der LED-Lichtquellen dienen. Hierdurch sind die Gestaltungsmöglichkeiten der Leuchte mit Bezug auf deren äußeres Erscheinungsbild limitiert.

Aus der US 2010/0220497 A1 ist eine Leuchte mit einer LED-Lichtquelle und einem gekrümmten Lichtleiter bekannt. Das Licht der LEDs tritt über eine Schmalseite in den Lichtleiter ein und über einen Lichtabgabe-Flächenbereich wieder aus Letzterem aus.

Aus der WO 2012/168822 A1 ist eine Leuchte mit einer LED-Lichtquelle und einem Lichtleitelement bekannt. Das Lichtleitelement weist eine Krümmung auf.

Weitere Leuchten mit gekrümmten Lichtleitern sind aus den Schriften US 2010/0315811 A1 und WO 2009/136310 A2 bekannt.

Schließlich zeigt die US 6,874,924 B1 eine Anordnung zur Lichtabgabe, mit deren Hilfe die Abstrahlcharakteristik eine Leuchtstofflampe erzielt werden soll. Ein länglicher röhrenartiger Lichtleiter weist hierbei einen sich in Längsrichtung erstreckenden Schlitz auf, in dem LEDs angeordnet sind, deren Licht in den Lichtleiter eingekoppelt wird. Dieses Licht wird dann in dem Lichtleiter verteilt und über dessen Außenumfang abgegeben.

Der vorliegenden Erfindung liegt die Aufgabe zugrunde, eine entsprechende verbesserte Leuchte anzugeben. Insbesondere soll die Leuchte mit Bezug auf deren äußeres Erscheinungsbild mehr Gestaltungsfreiraum bieten.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Leuchte vorgesehen, die ein Leuchtmittel zur Erzeugung eines Lichts aufweist, sowie ein Lichtleitelement. Dabei ist die Leuchte derart gestaltet, dass das Licht über eine Schmalseite des Lichtleitelements in Letzteres eingekoppelt wird und im Weiteren über einen Lichtabgabe-Flächenbereich des Lichtleitelements abgegeben wird. Das Lichtleitelement ist derart geformt, dass es eine Achse aufweist und sich dabei - in einem Querschnitt normal zu der Achse betrachtet - längs einer Profillinie erstreckt, die in erster Näherung C-förmig ist und wenigstens eine Krümmung aufweist, wobei die Leuchte ferner ein Gehäuse zur Halterung des Lichtleitelements und des Leuchtmittels aufweist und die Leuchte derart gestaltet ist, dass das Gehäuse - entgegen einer Flächennormalen (*N*) des Lichtabgabe-Flächenbereichs gesehen - hinter dem Lichtabgabe-Flächenbereich angeordnet ist.

Durch die Krümmung des Lichtleitelements lässt sich erzielen, dass die Leuchte so gestaltet werden kann, dass bei einer Betrachtung der Leuchte zumindest im Wesentlichen lediglich das Lichtleitelement zu sehen ist. Hierdurch ist ein besonders ebenmäßiges äußeres Erscheinungsbild der Leuchte ermöglicht.

Das Lichtleitelement ist hierbei erfindungsgemäß derart geformt, dass die Profillinie einen ersten geradlinigen Abschnitt aufweist, wobei der Lichtabgabe-Flächenbereich des Lichtleitelements im Bereich des ersten geradlinigen Abschnitts ausgebildet ist, wobei das Lichtleitelement auf einer, dem Lichtabgabe-Flächenbereich gegenüber liegenden Seite eine erste Auskoppelstruktur sowie längs der wenigstens einen Krümmung eine zweite Auskoppelstruktur aufweist, wobei die zweite Auskoppelstruktur im Vergleich zu der ersten Auskoppelstruktur schwächer wirkend ausgebildet ist.

Vorzugsweise ist dabei das Lichtleitelement weiterhin derart geformt, dass es - in dem Querschnitt betrachtet - zumindest in erster Näherung an allen Stellen der Profillinie eine einheitliche Stärke aufweist. Herstellungstechnisch vorteilhaft ist das Lichtleitelement durch Verformen einer Lichtleitplatte gebildet.

Bei der Achse handelt es sich vorzugsweise um eine Hauptachse der Lichtleitelements.

Erfindungsgemäß ist also das Lichtleitelement so geformt, dass die Profillinie zumindest in erster Näherung C-förmig ist. Auf diese Weise lässt sich mit dem Lichtleitelement vorteilhaft eine - relativ gesehen - besonders große Lichtabgabeflächen bilden.

Eine besonders vorteilhafte Lichteinkopplung ist ermöglicht, wenn - in dem Querschnitt betrachtet - das Leuchtmittel an einem ersten Endbereich der Profillinie angeordnet ist.

Eine besonders homogene Lichtverteilung in dem Lichtleitelement ist ermöglicht, wenn die Leuchte außerdem ein weiteres Leuchtmittel zur Erzeugung eines weiteren Lichts aufweist, wobei - in dem Querschnitt betrachtet - das weitere Leuchtmittel an einem zweiten Endbereich der Profillinie angeordnet ist.

Erfindungsgemäß weist die Leuchte weiterhin ein Gehäuse zur Halterung des Lichtleitelements und des Leuchtmittels auf, wobei die Leuchte derart gestaltet ist, dass das Gehäuse - entgegen einer Flächennormalen des Lichtabgabe-Flächenbereichs gesehen - hinter dem Lichtabgabe-Flächenbereich angeordnet ist und dabei vorzugsweise - in einer Projektion entgegen der Flächennormalen betrachtet - die Projektionsfläche des Gehäuses zumindest überwiegend innerhalb der Projektionsfläche des Lichtleitelements liegt. Besonders vorteilhaft ist die Gestaltung dabei außerdem derart, dass die Projektionsfläche des Gehäuses maximal 60%, vorzugsweise maximal 40%, besonders bevorzugt maximal 25% der Projektionsfläche des Lichtleitelements beträgt. Hierdurch lässt sich der Einfluss des Gehäuses innerhalb des äußeren Erscheinungsbilds der Leuchte deutlich reduzieren.

Auf einer, dem Lichtabgabe-Flächenbereich gegenüber liegenden Seite weist das Lichtleitelement also erfindungsgemäß eine Auskoppelstruktur, insbesondere in Form von Gravuren, beispielsweise Laser-Gravuren, auf.

Längs der wenigstens einen Krümmung weist das Lichtleitelement ferner eine weitere Auskoppelstruktur auf, die im Vergleich zu der zuerst genannten Auskoppelstruktur allerdings schwächer wirkend ausgebildet ist.

Zur Effizienzsteigerung weist die Leuchte vorzugsweise außerdem ein Reflexionselement auf, das zumindest teilweise die Auskoppelstruktur überdeckend angeordnet ist. Wenn dabei das Reflexionselement teilweise lichtdurchlässig, beispielsweise perforiert ist, lässt sich auf diese Weise auch eine weitere Lichtabgabe in eine andere Richtung, beispielsweise nach oben zur Erzeugung einer indirekten Beleuchtung bewirken.

Weiterhin vorzugsweise weist das Lichtleitelement außerdem wenigstens einen weiteren Lichtabgabe-Flächenbereich auf, der in eine andere Richtung weist, als der zuerst genannte Lichtabgabe-Flächenbereich, vorzugsweise in eine entgegengesetzte Richtung. Auch hierdurch lässt sich beispielsweise eine Lichtabgabe in eine weitere Richtung bewirken, insbesondere in den oberen Halbraum zur Erzeugung einer indirekten Beleuchtung.

Die Erfindung wird im Folgenden anhand eines Ausführungsbeispiels und mit Bezug auf die Zeichnungen näher erläutert. Es zeigen:
- Fig. 1: eine perspektivische Skizze einer erfindungsgemäßen Leuchte von schräg oben,
- Fig. 2: eine entsprechende Skizze von schräg unten und
- Fig. 3: eine Querschnittskizze der Leuchte.

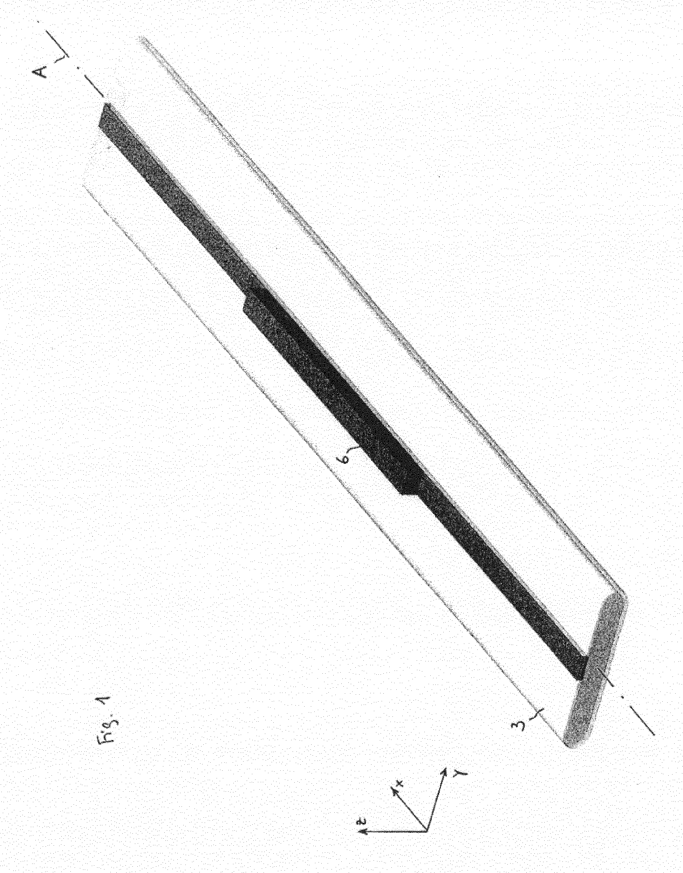

In Fig. 1 ist eine perspektivische Skizze einer erfindungsgemäßen Leuchte gezeigt. Bei diesem Ausführungsbeispiel handelt es sich um eine Deckenleuchte, beispielsweise in Form einer Pendelleuchte, die dafür vorgesehen ist, zum Betrieb von einer Decke abgehängt angeordnet zu werden. Entsprechende Haltemittel in Form von Pendelstangen, Ketten oder dergleichen sind in Fig. 1 aus Gründen der Übersichtlichkeit nicht näher dargestellt.

Zur leichteren Beschreibung ist in Fig. 1 ein kartesisches x, y, z-Koordinatensystem angegeben, wobei die z-Achse in der Vertikalen orientiert ist und nach oben weist. Im Folgenden wird von einer entsprechenden betriebsgemäßen Orientierung der Leuchte mit Bezug auf die Vertikale ausgegangen. Allerdings eignet sich die Leuchte grundsätzlich auch für eine anderweitige Orientierung. In einem solchen Fall sind die vorliegenden Richtungsangaben etc. entsprechend umzudeuten.

Im gezeigten Beispiel ist die Leuchte insgesamt länglich, so dass sie sich entlang einer Achse A, also einer Längsachse erstreckt, die hier parallel zur x-Achse gezeichnet ist.

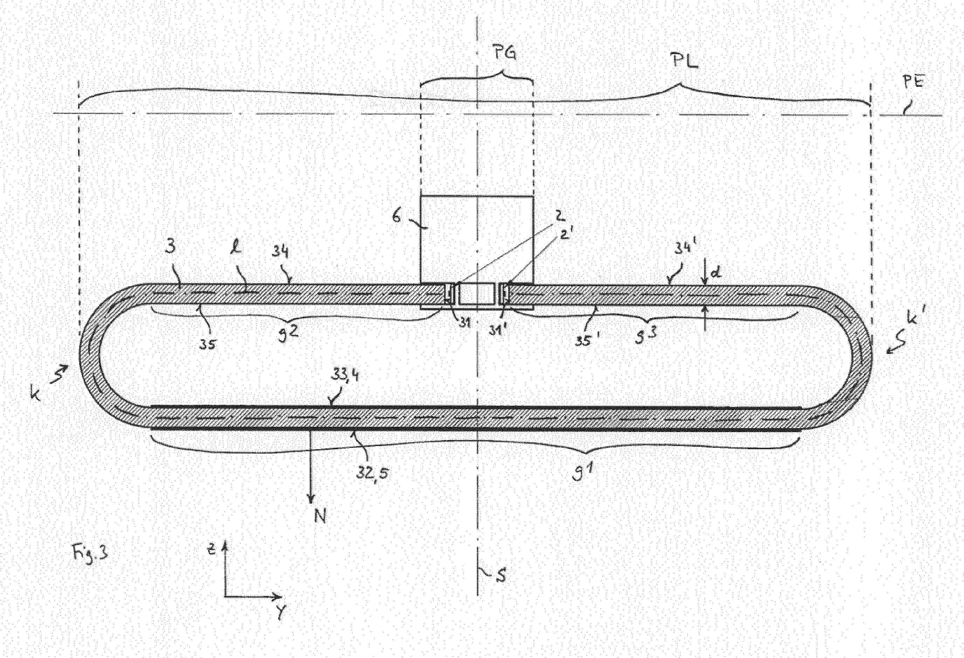

In Fig. 3 ist ein Querschnitt durch die Leuchte normal zu der Achse A skizziert. Die Leuchte weist ein Leuchtmittel 2 zur Erzeugung eines Lichts auf. Das Leuchtmittel 2 kann mehrere LEDs umfassen, die insbesondere längs einer Geraden angeordnet sind, die sich parallel zu der Achse A erstreckt, also in Fig. 3 normal zur Zeichenebene.

Weiterhin weist die Leuchte ein Lichtleitelement 3 auf. Die Leuchte ist dabei derart gestaltet, dass das von dem Leuchtmittel 2 erzeugte Licht über eine Schmalseite 31 des Lichtleitelements 3 in Letzteres eingekoppelt wird. Im Weiteren wird das Licht über einen Lichtabgabe-Flächenbereich 32 des Lichtleitelements 3 abgegeben, insbesondere in den unteren Halbraum zur Erzeugung einer direkten Beleuchtung. Der Lichtabgabe-Flächenbereich 32 ist vorzugsweise zumindest in erster Näherung plan mit einer nach unten, bzw. in die negative z-Richtung weisenden, Flächennormalen N gestaltet.

Zur Steigerung der Effizienz der Einkopplung des von dem Leuchtmittel 2 erzeugten Lichts in das Lichtleitelement 3 kann beispielsweise an der Schmalseite 31 ein optisch wirksames Einkoppelband aufgebracht sein.

Das Lichtleitelement 3 ist derart geformt, dass es eine Achse aufweist, die hier insbesondere mit der oben erwähnten Achse A der Leuchte identisch ist bzw. zusammenfällt. Im gezeigten Beispiel ist das Lichtleitelement 3 insgesamt länglich, so dass es eine Längsachse oder Hauptachse aufweist, die hier mit der Achse A identisch ist. Vorzugsweise sind die Begrenzungen der Leuchte entlang der Achse A durch das Lichtleitelement 3 gebildet. Mit anderen Worten kann sich das Lichtleitelement 3 auf beiden Seiten bis zu den Stirnendbereichen der Leuchte erstrecken bzw. diese Stirnendbereiche bilden. Alternativ kann jedoch auch vorgesehen sein, dass an einem Stirnendbereich oder jeweils an den beiden Stirnendbereichen ein (in den Figuren nicht gezeigtes) vorzugsweise etwa plattenförmiges Abschlusselement vorgesehen ist. Durch ein solches Abschlusselement lässt sich verhindern, dass Staub oder dergleichen von den Stirnseiten her in einen inneren Bereich des Lichtleitelements 3 eindringt und sich dort ablagert.

Die LEDs des Leuchtmittels 2 erstrecken sich vorzugsweise entlang der Geraden bzw. der Achse A über die gesamte Längserstreckung des Lichtleitelements 3, so dass eine Einkopplung des von dem Leuchtmittel 2 erzeugten Lichts über die gesamte Länge des Lichtleitelements 3 hinweg vorgesehen ist.

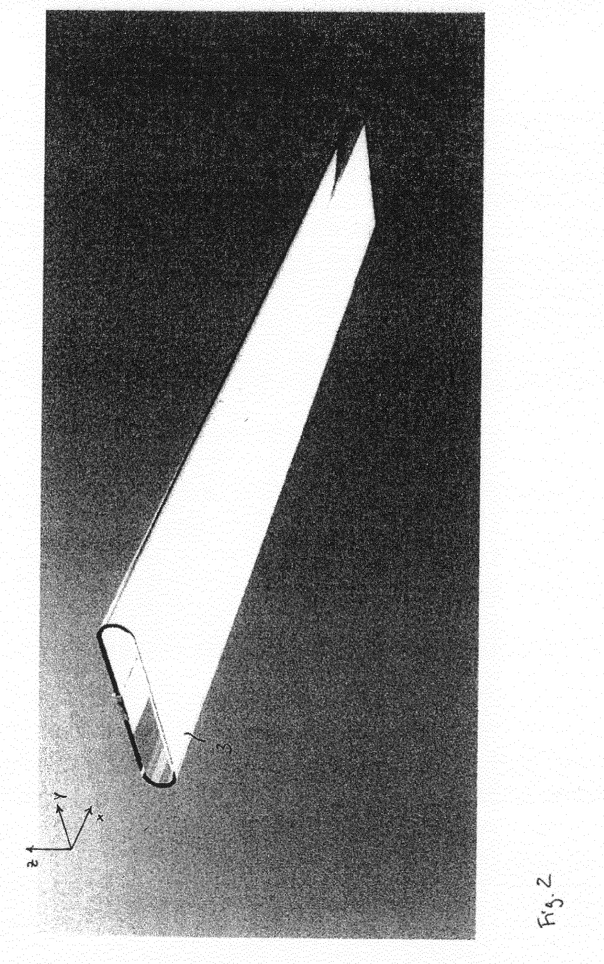

Wie in Fig. 3 mit einer strichpunktierten Linie angedeutet, erstreckt sich das Lichtleitelement 3 - in einem Querschnitt normal zu der Achse A betrachtet - längs einer Profillinie *l*, wobei diese Profillinie / wenigstens eine Rundung oder Krümmung k aufweist. In Fig. 2 ist eine perspektivische Ansicht der Leuchte von schräg unten skizziert. Wie aus dieser Skizze beispielhaft hervorgeht, lässt sich durch eine entsprechende Krümmung des Lichtleitelements 3 erzielen, dass bei einer Betrachtung der Leuchte von unterhalb keine Bauteile der Leuchte auffallen, die zur Halterung des Leuchtmittels 2 oder des Lichtleiters 3 dienen. Vielmehr ist das Erscheinungsbild der Leuchte praktisch ausschließlich durch das Lichtleitelement 3 gebildet.

Im gezeigten Beispiel ist das Lichtleitelement 3 derart geformt, dass es entlang der Achse A zumindest größtenteils, vorzugsweise über seine gesamte Erstreckung entlang der Achse A hinweg dieselbe Querschnittform aufweist, also sozusagen profilförmig gestaltet ist.

Das Lichtleitelement 3 ist weiterhin vorzugsweise derart geformt, dass es in dem genannten Querschnitt normal zu der Achse A zumindest in erster Näherung an allen Stellen der Profillinie *l* eine einheitliche Stärke *d* aufweist.

Vorzugsweise ist das Lichtleitelement 3 durch Verformen einer Lichtleitplatte gebildet. Insbesondere kann es sich dabei bei der Lichtleitplatte um eine Acrylplatte handeln und die Verformung unter Nutzung von Wärme erfolgen. Mit anderen Worten kann es sich bei dem Lichtleitelement 3 um eine warm verformte Acrylplatte handeln. Hierdurch lassen sich die oben genannten Formeigenschaften des Lichtleitelements 3 herstellungstechnisch besonders vorteilhaft erzielen.

Wie aus Fig. 3 hervorgeht, ist das Lichtleitelement 3 so geformt, dass die Profillinie *l* zumindest in erster Näherung C-förmig ist. Insbesondere kann das Lichtleitelement 3 hierzu außer der Krümmung *k* eine weitere Krümmung *k'* aufweisen. Weiterhin ist das Lichtleitelement 3 so geformt, dass die Profillinie *l* einen ersten geradlinigen Abschnitt *g1* aufweist, der vorzugsweise horizontal verläuft bzw. der sich längs der y-Achse erstreckt. Dabei ist der Lichtabgabe-Flächenbereich 32 des Lichtleitelements 3 in dem Bereich dieses ersten geradlinigen Abschnitts *g1* ausgebildet. Insbesondere kann der erste geradlinige Abschnitt *g1* zwischen der Krümmung *k* und der weiteren Krümmung *k'* ausgebildet sein.

Im gezeigten Beispiel ist die Leuchte so geformt, dass man aufgrund der beschriebenen Form des Lichtleitelements 3 in x-Richtung durch die Leuchte hindurchsehen kann (wenn keine entsprechenden Abschlusselemente an den Stirnendbereichen vorhanden sind).

Das Leuchtmittel 2 ist vorzugsweise an einem ersten Endbereich der Profillinie / angeordnet. Die Schmalseite 31, über die das von dem Leuchtmittel 2 erzeugte Licht in das Lichtleitelement 3 eingekoppelt wird, ist dabei vorzugsweise - in dem Querschnitt betrachtet - rechtwinklig bzw. normal zu dem anschließenden Abschnitt der Profillinie / orientiert ausgebildet.

Vorzugsweise weist die Leuchte außerdem ein weiteres Leuchtmittel 2' zur Erzeugung eines weiteren Lichts auf, wobei - in dem Querschnitt betrachtet - das weitere Leuchtmittel 2' an einem bzw. dem zweiten Endbereich der Profillinie *l* angeordnet ist. Das weitere Leuchtmittel 2' ist insbesondere analog oder baugleich zu dem zuerst genannten Leuchtmittel 2 gestaltet. Das zuerst genannte Leuchtmittel 2 und das weitere Leuchtmittel 2' können alternativ auch zu einem Leuchtmittel zusammengefasst gestaltet sein.

Weiterhin vorteilhaft ist das Lichtleitelement 3 so geformt, dass die Profillinie *l* außerdem einen zweiten geradlinigen Abschnitt g2 aufweist, der insbesondere parallel zu dem ersten geradlinigen Abschnitt *g1* verlaufend gebildet ist. Vorzugsweise erstreckt sich der zweite geradlinige Abschnitt *g2* bis zu dem ersten Endbereich der Profillinie *l*, also bis zu der oben genannten Schmalseite 31, über die das Licht des Leuchtmittels 2 in das Lichtleitelement 3 eingekoppelt wird.

Weiterhin vorteilhaft ist das Lichtleitelement 3 so geformt, dass die Profillinie *l* außerdem einen dritten geradlinigen Abschnitt *g3* aufweist, der insbesondere in einer geradlinigen Verlängerung des zweiten geradlinigen Abschnitts *g2* verlaufend gebildet ist.

Besonders bevorzugt ist das Lichtleitelement 3 symmetrisch mit Bezug auf eine vertikal orientierte Symmetrieebene *S* geformt, die parallel zu der Achse *A,* insbesondere zwischen dem zweiten geradlinigen Abschnitt *g2* und dem dritten geradlinigen Abschnitt *g3* verläuft.

Auch das weitere Leuchtmittel 2' ist dabei vorzugsweise entsprechend symmetrisch zu dem zuerst genannten Leuchtmittel 2 gestaltet. Dementsprechend weist das Lichtleitelement 3 eine weitere Schmalseite 31' auf, die analog bzw. mit Bezug auf die Symmetrieebene *S* spiegelsymmetrisch zu der zuerst genannten Schmalseite 31 ausgebildet ist. Die zuerst genannte Schmalseite 31 und die weitere Schmalseite 31' sind also zueinander gewandt orientiert.

Im gezeigten Beispiel ist die Profillinie *l* dementsprechend durch den zweiten geradlinigen Abschnitt *g2,* die zuerst genannte Krümmung *k,* den ersten geradlinigen Abschnitt *g1,* die weitere Krümmung *k'* und den dritten geradlinigen Abschnitt g3 gebildet, und zwar in dieser Reihenfolge. Die beiden genannten Krümmungen *k, k'* umfassen dementsprechend jeweils einen Winkel von 180°.

Der Lichtabgabe-Flächenbereich 32, über den das Licht von der Leuchte abgegeben wird, erstreckt sich vorteilhaft über denjenigen Abschnitt des Lichtleitelements 3, der durch den ersten geradlinigen Abschnitt *g1* der Profillinie *l* festgelegt ist.

Der Lichtleiter 3 ist dementsprechend so gestaltet, dass das Licht des Leuchtmittels 2 bzw. das weitere Licht des weiteren Leuchtmittels 2' entlang der Profillinie *l* innerhalb des Lichtleiters 3 weitergeleitet wird, und zwar insbesondere entlang der Krümmung k bzw. der weiteren Krümmung *k'.* Eine entsprechende Lichtleitung an der Krümmung *k* lässt sich dadurch geeignet erzielen, dass die Krümmung k so gestaltet wird, dass sie einen Krümmungsradius mit einem bestimmten Mindestmaß aufweist. Insbesondere lässt sich durch geeignete Wahl ein unerwünschter Lichtverlust entlang der Krümmung *k* vermeiden. Analoges gilt natürlich mit Bezug auf die weitere Krümmung *k'.*

Für eine entsprechende Lichtabgabe über den Lichtabgabe-Flächenbereich 32 ist das Lichtleitelement 3 auf einer, dem Lichtabgabe-Flächenbereich 32 gegenüberliegenden Fläche 33 mit einer Auskoppelstruktur, insbesondere in Form von Gravuren, beispielsweise durch Laser erzeugte Gravuren, versehen, wie dies an sich bekannt ist. Über den Auskoppelstrukturen bzw. den Gravuren kann zur Steigerung der Effizienz noch ein Reflexionselement angeordnet sein, beispielsweise eine reflektierende Schicht, insbesondere eine Reflektorfolie 4. Diese kann beispielsweise auf dem Lichtleitelement 3 aufgeklebt bzw. aufkaschiert sein. Alternativ könnte das Reflexionselement auch auf dem Lichtleitelement 3 auf der nach unten weisenden Seite im Bereich des zweiten geradlinigen Abschnitts g2 und/oder des dritten geradlinigen Abschnitts g3 angeordnet sein.

Auf dem nach unten weisenden Lichtabgabe-Flächenbereich 32 kann zur Beeinflussung des von der Leuchte abgegebenen Lichts noch ein Lichtlenkelement angeordnet sein, beispielsweise in Form einer lichtlenkenden Folie 5. Auch diese kann auf dem Lichtleitelement 3 aufgeklebt bzw. aufkaschiert sein.

Zur Herstellung kann vorgesehen sein, dass die Auskoppelstruktur bzw. die Lasergravuren hergestellt werden, solange die Acrylplatte noch plan ist, also noch nicht verformt bzw. warmverformt ist. Die anschließende Verformung kann dann ohne Beeinträchtigung der Auskoppelstruktur durchgeführt werden.

Längs der wenigstens einen Krümmung *k* ist das Lichtleitelement 3 so gestaltet, dass es dort eine weitere Auskoppelstruktur aufweist, die - im Vergleich zu der zuerst genannten Auskoppelstruktur gegenüber des Lichtabgabe-Flächenbereichs 32 - schwächer wirkend ausgebildet ist.

Für eine Lichtabgabe in eine andere Richtung, insbesondere nach oben zur Erzeugung einer indirekten Beleuchtung, kann das Lichtleitelement 3 weiterhin wenigstens einen weiteren Lichtabgabe-Flächenbereich 34 aufweisen, der in eine andere Richtung weist, als der zuerst genannte Lichtabgabe-Flächenbereich 32. Im gezeigten Beispiel ist ein erster solcher weiterer Lichtabgabe-Flächenbereich 34 im Bereich des zweiten geradlinigen Abschnitts *g2* der Profillinie *l* ausgebildet, sowie ein zweiter weiterer Lichtabgabe-Flächenbereich 34' im Bereich des dritten geradlinigen Abschnitts g3 der Profillinie *l*.

Zur effektiven Lichtauskopplung über den weiteren Lichtabgabe-Flächenbereich 34 bzw. 34' kann das Lichtleitelement 3 auf der, dem weiteren Lichtabgabe-Flächenbereich 34 bzw. 34' gegenüber liegenden Seite 35 bzw. 35' wiederum eine entsprechende Auskoppelstruktur aufweisen, also beispielsweise wiederum in Form von Lasergravuren.

Alternativ oder ergänzend kann vorgesehen sein, dass das oben erwähnte Reflexionselement, also beispielsweise die Reflektorfolie 4, teilweise lichtdurchlässig ist, so dass ein Teil des Lichts aus dem Lichtleitelement 3 über das Reflexionselement nach oben hin abgegeben wird. Die Reflektorfolie 4 kann hierzu beispielsweise perforiert sein.

Gemäß der obigen Beschreibung kann also eine entsprechende Auskoppelstruktur auf einer, dem betreffenden Lichtabgabe-Flächenbereich 32, 34, 34' des Lichtleitelements 3 gegenüber liegenden Seite des Lichtleitelements 3 ausgebildet sein. Alternativ oder ergänzend hierzu kann eine entsprechende Auskoppelstruktur auch auf der Seite des betreffenden Lichtabgabe-Flächenbereichs 32, 34, 34' ausgebildet sein. Beispielsweise kann also die zuerst genannte Auskoppelstruktur unmittelbar an dem zuerst genannten Lichtabgabe-Flächenbereich 32 ausgebildet sein. Mit Bezug auf die Herstellung ist es in diesem Fall auch gut möglich, zunächst die Acrylplatte wie beschrieben zu verformen und erst anschließend die Auskoppelstruktur auszubilden. Allerdings weist die oben beschrieben Variante, bei der die Auskoppelstruktur dem Lichtabgabe-Flächenbereich 32 gegenüberliegend ausgebildet ist, Vorteile mit Bezug auf die Nutzung zusätzlicher Elemente zur Beeinflussung der Lichtabgabe auf, beispielsweise in Form der oben erwähnten lichtlenkenden Folie 5.

Weiterhin weist die Leuchte ein Gehäuse 6 auf, das zur Halterung des Lichtleitelements 3 und des Leuchtmittels 2 und gegebenenfalls des weiteren Leuchtmittels 2' ausgestaltet ist. Wie aus Fig. 1 beispielhaft hervorgeht, kann das Gehäuse 6 - wie die gesamte Leuchte - länglich sein, so dass es sich entlang der Achse A erstreckt. Wie im gezeigten Beispiel der Fall, kann sich das Gehäuse 6, wie auch das Lichtleitelement 3, in Richtung der Achse *A* über die gesamte Länge der Leuchte erstrecken.

Die Leuchte ist dabei so gestaltet, dass das Gehäuse 6 oberhalb des Lichtabgabe-Flächenbereichs 32 angeordnet ist bzw. - allgemeiner formuliert - entgegen der Flächennormalen *N* des Lichtabgabe-Flächenbereichs 32 gesehen hinter dem Lichtabgabe-Flächenbereich 32.

Wenn in einer Projektion entgegen der Flächennormalen *N* betrachtet, also so wie in Fig. 3 anhand einer beispielhaft angedeuteten Projektionsebene *PE* skizziert, die Projektionsfläche *PG* des Gehäuses 6 zumindest überwiegend innerhalb der Projektionsfläche *PL* des Lichtleitelements 3 liegt, lässt sich erzielen, dass bei Betrachtung der Leuchte das Gehäuse 6 besonders wenig ins Auge fällt. Dies gilt insbesondere, wenn dabei die Projektionsfläche *PG* des Gehäuses 6 maximal 60%, vorzugsweise maximal 40%, besonders bevorzugt maximal 25% der Projektionsfläche *PL* des Lichtleitelements 3 beträgt.

Die vertikale Erstreckung bzw. die Erstreckung in z-Richtung des Gehäuses 6 ist dabei vorzugsweise nicht größer als die entsprechende Erstreckung des Lichtleitelements 3.

Weitere Leuchtenbauteile, beispielsweise ein Betriebsgerät zum Betrieb der LEDs können ebenfalls in dem Gehäuse 6 angeordnet sein. Wie in Fig. 1 angedeutet, kann das Gehäuse 6 zur Aufnahme des Betriebsgeräts in einem, mit Bezug auf die Achse A mittleren Bereich einen vergrößerten Umfang aufweisen.

Insbesondere kann es sich bei dem Gehäuse 6 um das einzige Gehäuse der Leuchte handeln. Vorteilhaft ist die Gestaltung so, dass sich sämtliche, zum Betrieb der Leuchte erforderlichen Leuchtenbauteile mit Ausnahme des Lichtleitelements 3 und gegebenenfalls der beschriebenen, auf dem Lichtleitelement 3 aufgeklebten optischen Elemente innerhalb des Gehäuses 6 befinden.

Durch die beschriebene Ausgestaltung lässt sich erzielen, dass mit der Leuchte ein ganz besonderer Eindruck vermittelt wird; die Leuchte kann quasi als sphärischer Leuchtenkörper wirken, der sich durch seine Transparenz und Leichtigkeit auszeichnet.

## Patentansprüche

1. Leuchte, aufweisend
- ein Leuchtmittel (2) zur Erzeugung eines Lichts und
- ein Lichtleitelement (3),
wobei die Leuchte derart gestaltet ist, dass das Licht über eine Schmalseite (31) des Lichtleitelements (3) in Letzteres eingekoppelt wird und im Weiteren über einen Lichtabgabe-Flächenbereich (32) des Lichtleitelements (3) abgegeben wird,
wobei das Lichtleitelement (3) derart geformt ist, dass es eine Achse (*A*) aufweist und sich dabei - in einem Querschnitt normal zu der Achse (*A*) betrachtet - längs einer Profillinie (*l*) erstreckt, die in erster Näherung C-förmig ist und wenigstens eine Krümmung (*k*) aufweist,
weiterhin aufweisend
- ein Gehäuse (6) zur Halterung des Lichtleitelements (3) und des Leuchtmittels (2), wobei die Leuchte derart gestaltet ist, dass das Gehäuse (6) - entgegen einer Flächennormalen (*N*) des Lichtabgabe-Flächenbereichs (32) gesehen - hinter dem Lichtabgabe-Flächenbereich (32) angeordnet ist,
**dadurch gekennzeichnet,**
**dass** das Lichtleitelement (3) derart geformt ist, dass die Profillinie (*l*) einen ersten geradlinigen Abschnitt (*g1*) aufweist, wobei der Lichtabgabe-Flächenbereich (32) des Lichtleitelements (3) im Bereich des ersten geradlinigen Abschnitts (*g1*) ausgebildet ist,
und **dass** das Lichtleitelement (3) auf einer, dem Lichtabgabe-Flächenbereich (32) gegenüber liegenden Seite eine erste Auskoppelstruktur sowie längs der wenigstens einen Krümmung (*k*) eine zweite Auskoppelstruktur aufweist, wobei die zweite Auskoppelstruktur im Vergleich zu der ersten Auskoppelstruktur schwächer wirkend ausgebildet ist.

2. Leuchte nach Anspruch 1,
bei der das Lichtleitelement (3) derart geformt ist, dass es - in dem Querschnitt betrachtet - zumindest in erster Näherung an allen Stellen der Profillinie (*l*) eine einheitliche Stärke (*d*) aufweist.

3. Leuchte nach Anspruch 1 oder 2,
bei der das Lichtleitelement (3) durch Verformen einer Lichtleitplatte gebildet ist.

4. Leuchte nach einem der vorhergehenden Ansprüche,
bei der es sich bei der Achse (*A*) um eine Hauptachse der Lichtleitelements (3) handelt.

5. Leuchte nach einem der vorhergehenden Ansprüche,
dass - in dem Querschnitt betrachtet - das Leuchtmittel (2) an einem ersten Endbereich der Profillinie (*l*) angeordnet ist.

6. Leuchte nach Anspruch 5,
weiterhin aufweisend
- ein weiteres Leuchtmittel (2') zur Erzeugung eines weiteren Lichts, wobei - in dem Querschnitt betrachtet - das weitere Leuchtmittel (2') an einem zweiten Endbereich der Profillinie (*l*) angeordnet ist.

7. Leuchte nach einem der vorhergehenden Ansprüche,
die derart gestaltet ist, dass - in einer Projektion entgegen der Flächennormalen (*N*) betrachtet - die Projektionsfläche (*PG*) des Gehäuses (6) zumindest überwiegend innerhalb der Projektionsfläche (*PL*) des Lichtleitelements (3) liegt.

8. Leuchte nach einem der vorhergehenden Ansprüche,
die außerdem derart gestaltet ist, dass dabei die Projektionsfläche (*PG*) des Gehäuses (6) maximal 60%, vorzugsweise maximal 40%, besonders bevorzugt maximal 25% der Projektionsfläche (*PL*) des Lichtleitelements (3) beträgt.

9. Leuchte nach einem der vorhergehenden Ansprüche,
bei der die Auskoppelstrukturen Gravuren, beispielsweise Laser-Gravuren, sind.

10. Leuchte nach einem der vorhergehenden Ansprüche,
weiterhin aufweisend
- ein Reflexionselement (4), das zumindest teilweise die erste Auskoppelstruktur überdeckend angeordnet ist.

11. Leuchte nach Anspruch 10,
bei der das Reflexionselement (4) teilweise lichtdurchlässig, beispielsweise perforiert ist.

12. Leuchte nach einem der vorhergehenden Ansprüche,
bei der das Lichtleitelement (3) weiterhin wenigstens einen weiteren Lichtabgabe-Flächenbereich (34, 34') aufweist, der in eine andere Richtung weist, als der zuerst genannte Lichtabgabe-Flächenbereich (32), vorzugsweise in eine entgegengesetzte Richtung.

## Claims

1. Lamp, comprising
- a lighting means (2) for producing a light,
- a light-guiding element (3),
wherein the lamp is designed such that the light is coupled into the light-guiding element (3) via a narrow side (31) of said light-guiding element and subsequently emitted via a light emission surface area (32) of the light-guiding element (3),
wherein the light-guiding element (3) is formed such that it comprises an axis *(A)* and, viewed in a cross-section normal to the axis (*A*), extends along a profile line (*I*) which in a first approximation is C-shaped and comprises at least one curvature (*k*),
further comprising
- a housing (6) for holding the light-guiding element (3) and the lighting means
(2), wherein the lamp is designed such that, viewed counter to a surface normal (*N*) of the light emission surface area (32), the housing (6) is disposed behind the light emission surface area (32),
**characterized in that**
the light-guiding element (3) is formed such that the profile line (1) comprises a first straight section (*g1*), wherein the light emission surface area (32) of the light-guiding element (3) is configured in the region of the first straight section (*g1*)*,*
and that the light-guiding element (3) comprises a first decoupling structure on a side opposite the light emission surface area (32) and a second decoupling structure along the at least one curvature (*k*), wherein the second decoupling structure is configured to have a weaker effect than the first decoupling structure.

2. Lamp according to Claim 1,
in which the light-guiding element (3) is formed such that, viewed in cross-section and at least in a first approximation, has a uniform thickness *(d)* at all points on the profile line (*1*).

3. Lamp according to Claim 1 or 2,
in which the light-guiding element (3) is formed by deforming a light guide plate.

4. Lamp according to any one of the preceding claims,
in which the axis *(A)* is a main axis of the light-guiding element (3).

5. Lamp according to any one of the preceding claims,
that, viewed in cross-section, the lighting means (2) is disposed on a first end region of the profile line (*1*).

6. Lamp according to Claim 5,
further comprising
- a further lighting means (2') for producing a further light,
wherein, viewed in cross-section, the further lighting means (2') is disposed on a second end region of the profile line (1) .

7. Lamp according to any one of the preceding claims, which is designed such that, viewed in a projection counter to the surface normal (*N*), the projection surface *(PG)* of the housing (6) lies at least predominantly within the projection surface *(PL)* of the light-guiding element (3).

8. Lamp according to any one of the preceding claims,
which is furthermore designed such that the projection surface *(PG)* of the housing (6) is at most 60%, preferably at most 40%, particularly preferably at most 25% of the projection surface *(PL)* of the light-guiding element (3).

9. Lamp according to any one of the preceding claims,
in which the decoupling structures are engravings, for example laser engravings.

10. Lamp according to any one of the preceding claims, further comprising
- a reflective element (4), which is disposed to at least partially cover the first decoupling structure.

11. Lamp according to Claim 10,
in which the reflective element (4) is partially light-permeable, for example perforated.

12. Lamp according to any one of the preceding claims,
in which the light-guiding element (3) further comprises at least one further light emission surface area (34, 34') which faces in a different direction than the first mentioned light emission surface area (32), preferably in an opposite direction.

## Revendications

1. Luminaire, comprenant
- une source de lumière (2) pour la génération d'une lumière et
- un élément de guidage de lumière (3),
le luminaire étant conçu de telle façon que la lumière est couplée dans l'élément de guidage de lumière (3) à travers un côté étroit (31) de celui-ci et est en outre émise à travers une zone de surface d'émission de lumière (32) de l'élément de guidage de lumière (3),
l'élément de guidage de lumière (3) étant formé de telle façon qu'il présente un axe *(A)* et qu'il s'étend - vu d'une coupe transversale perpendiculaire à l'axe *(A)* - le long d'une ligne de profil (*l*) qui est en première approximation en forme de C et présente au moins une courbure (*k*),
comprenant en outre
- un boîtier (6) pour le support de l'élément de guidage de lumière (3) et de la source de lumière
(2), le luminaire étant conçu de telle façon que le boîtier (6) - vu dans le sens contraire à une normale (*N*) à la surface de la zone de surface d'émission de lumière (32) - est disposé derrière la zone de surface d'émission de lumière (32),
**caractérisé en ce,**
**que** l'élément de guidage de lumière (3) est formé de telle façon que la ligne de profil (*1*) présente une première section rectiligne (*g1*), la zone de surface d'émission de lumière (32) de l'élément de guidage de lumière (3) étant réalisée dans la zone de la première section rectiligne (*g1*),
et en ce que l'élément de guidage de lumière (3) présente une première structure de découplage sur une face, opposée à la zone de surface d'émission de lumière (32), ainsi qu'une deuxième structure de découplage le long de l'au moins une courbure (*g1*), la deuxième structure de découplage étant réalisée de manière à être plus faible comparé à la première structure de découplage.

2. Luminaire selon la revendication 1,
dans lequel l'élément de guidage de lumière (3) est formé de telle façon qu'il présente - vu dans la coupe transversale - au moins en première approximation une intensité *(d)* uniforme à tous les points de la ligne de profil (*1*).

3. Luminaire selon la revendication 1 ou 2,
dans lequel l'élément de guidage de lumière (3) est formé par la déformation d'une plaque de guidage de lumière.

4. Luminaire selon l'une quelconque des revendications précédentes,
dans lequel l'axe *(A)* est un axe principal de l'élément de guidage de lumière (3).

5. Luminaire selon l'une quelconque des revendications précédentes,
dans lequel - vu dans la coupe transversale - la source de lumière (2) est disposée dans une première zone d'extrémité de la ligne de profile (*1*).

6. Luminaire selon la revendication 5,
comprenant en outre
- une autre source lumineuse (2') pour la génération d'une autre lumière,
dans lequel - vu dans la coupe transversale - l'autre source de lumière (2') est disposée dans une deuxième zone d'extrémité de la ligne de profile (*1*).

7. Luminaire selon l'une quelconque des revendications précédentes,
qui est conçu de telle façon que - vu dans une projection contre le sens de la normale (*N*) à la surface - la surface de projection *(PG)* du boîtier (6) se situe au moins principalement à l'intérieur de la surface de projection *(PL)* de l'élément de guidage de lumière (3).

8. Luminaire selon l'une quelconque des revendications précédentes,
qui est en outre conçu de telle façon que la surface de projection *(PG)* du boîtier (6) est au maximum 60%, de préférence au maximum 40%, encore plus préférablement au maximum 25% de la surface de projection *(PL)* de l'élément de guidage de lumière (3).

9. Luminaire selon l'une quelconque des revendications précédentes,
dans lequel les structures de découplage sont des gravures, par exemples de gravures au laser.

10. Luminaire selon l'une quelconque des revendications précédentes,
comprenant en outre
- un élément de réflexion (4), qui est disposé de manière à couvrir au moins partiellement la première structure de découplage.

11. Luminaire selon la revendication 10,
dans lequel l'élément de réflexion (4) est partiellement transparent, par exemple perforé.

12. Luminaire selon l'une quelconque des revendications précédentes,
dans lequel l'élément de guidage de lumière (3) présente en outre au moins une autre zone de surface d'émission de lumière (34, 34'), qui est orientée dans une autre direction que la zone de surface d'émission de lumière (32) mentionnée en premier, de préférence dans une direction opposée.
